# EUROPEAN PATENT SPECIFICATION

(11) **EP 2 238 073 B1**
(45) Date of publication and mention of the grant of the patent: **22.05.2019**
(21) Application number: 08852817.9
(22) Date of filing: 17.11.2008
(51) Int. Cl.: C01B 3/38, C01B 3/48, B01J 8/04, B01J 4/00, B01J 19/26

(54) **PROCESS FOR THE PRODUCTION OF SYNTHESIS GAS AND HYDROGEN STARTING FROM LIQUID HYDROCARBONS**
VERFAHREN ZUR HERSTELLUNG VON SYNTHESEGAS UND WASSERSTOFF AUSGEHEND VON FLÜSSIGEN KOHLENWASSERSTOFFEN
PROCÉDÉ DE PRODUCTION DE GAZ DE SYNTHÈSE ET D'HYDROGÈNE À PARTIR D'HYDROCARBURES LIQUIDES

(30) Priority: 23.11.2007 IT MI20072228
(43) Date of publication of application: 13.10.2010
(73) Proprietor: ENI S.p.A., 00144 Roma (IT)
(72) Inventor: BASINI, Luca, I-20129 Milano (IT); GUARINONI, Alessandra, I-29100 Piacenza (IT); LAINATI, Andrea, I-20020 Lazzate (IT)
(74) Representative: Bottero, Carlo
(86) International application number: PCT/EP2008/009752
(87) International publication number: WO 2009/065559

(56) References cited:
- WO-A-2005/023710
- WO-A-2006/034868
- US-A- 4 115 074
- US-A- 4 174 954
- US-A1- 2005 089 465
- US-B1- 6 221 280

## Description

The present invention relates to a process for producing synthesis gas and hydrogen starting from liquid hydrocarbons.

In particular, the present invention relates to a catalytic partial oxidation process for producing synthesis gas and hydrogen starting from various kinds of liquid hydrocarbon feedstocks, also containing relevant quantities of sulphurated, nitrogenous and aromatic compounds.

The present invention considers the fact that the technological evolution of the refining field is currently conditioned by two main factors:
1) the necessity of also refining low-quality crude oils
2) the necessity of satisfying increasingly strict legislations which reduce the limits on the polluting emissions of combustion processes.

The evolution of the demand and offer of crude oil can create a situation in which light oils will tend to become limited and it will therefore be necessary to increasingly utilize heavy or extra heavy oils as starting materials to produce combustible products. Heavy or extra heavy oils have a high content of sulphurated, nitrogenous products and aromatic compounds and their use will require an increase in investments on hydroprocessing processes with the consequence that the availability of hydrogen will be an element of crucial importance in this sector.

During 2006, about 48 million of tons (corresponding to 67 x 10⁶ Nm³/h) of H₂ were produced worldwide, mainly used in the production of ammonia (about 60%), in oil refining processes (about 26%), for the synthesis of methanol (about 10%) and the remaining 4% for other uses. Only the demand for H₂ coming from refining and upgrading processes, however, is destined to grow very rapidly and consequently at a higher rate with respect to the overall demand.

Various sources estimate that, if the present development model does not change, hydrogen consumption will increase by more than 15% within 2015 (see, for example, SFA Pacific Inc. "Hydrogen - Synthesis Gas - Gas to Liquids: a Technical Business Analysis"; July 2005).

At present about 96% of the H₂, industrially produced for refinery and up-grading uses is obtained through the Steam Reforming process (SR) of Natural Gas (NG) and of light naphtha, whereas the remaining 4% is produced through the non-catalytic Partial Oxidation (PO) process of the processing residues of petroleum (L. Basini, Issues in H2 and Synthesis Gas Technologies for Refinery, GTL and Small and Distributed Industrial Needs", Catalysis today, 2005, 106, 34-40).

Both SR and non-catalytic PO produce synthesis gas, which is a mixture of H₂ and CO, with smaller amounts of CH₄ and CO₂. Pure H₂ is subsequently obtained from synthesis gas with a passage of Water Gas Shift (WGS - equation [2] in Table 1) and separation/purification of H₂.

Another widely-used technology for the production of synthesis gas is Auto Thermal Reforming (ATR). ATR can only use highly desulphurized NG and is widely used for producing synthesis gas for methanol synthesis, oxosynthesis and Fischer-Tropsch processes, whereas it is not used for producing H₂.

The characteristics of SR, non-catalytic PO and ATR are described in numerous documents in literature, among which: i) J.R. Rostrup-Nielsen, J. Sehested, J.K. Noskov. Adv. Catal. 2002, 47, 65-139; ii) R. Pitt, World Refining, 2001, 11(1), 6; iii) I. Dybkjaer, Petroleum Economist: Fundamental of Gas to Liquids, 1993, 47-49; iv) T. Rostrup-Nielsen, Catalysis Today, 2002, 71(3-4), 243-247, can be mentioned. The main chemical reactions of the above processes are in-eluded in Table 1.

**TABLE 1**

| Simplified reaction schemes of synthesis gas and hydrogen production processes. | | |
|---|---|---|
| **SR and CO₂ Reforming** | **ΔH°_{298 K} (Kj/mol)** | **eq.** |
| CH₄ + H₂O = CO + 3 H₂ | 206 | [1] |
| CO + H₂O = CO₂ + H₂ | -41 | [2] |
| CH₄ + CO₂ = 2 CO + 2 H₂ | 247 | [3] |

| **Non-catalytic partial oxidation** | | |
|---|---|---|
| CH₄ + 3/2 O₂ = CO + 2 H₂ O | -520 | [4] |
| CO + H₂O = CO₂ + H₂ | -41 | [2] |

| **AutoThermal Reforming (ATR)** | | |
|---|---|---|
| CH₄ + 3/2O₂ =CO + 2 H₂ O | -520 | [4] |
| CH₄ + H₂O = CO + 3 H₂ | 206 | [1] |
| CO + H₂O = CO₂ + H₂ | -41 | [2] |

The SR technology is extremely efficient from an energy point of view and produces H₂ from a light gaseous hydrocarbon feedstock and desulphurized through highly endothermal reactions (eq. [1], [3]).

The heat necessary for the reactions is generated inside an oven which includes "reformer tubes"; these tubular reactors are fed with a catalyst based on Ni deposited on a carrier typically consisting of mixed Mg and Al oxides. SR ovens having the greatest dimensions can house about 600 reformer tubes (with a diameter of 100 to 150 mm, and a length ranging from 10 to 13 m) and can produce synthesis gas in a single line from which more than 250,000 Nm³/hr of H₂ can be obtained.

Non-catalytic PO is much less used in the production of H₂, due to its lower energy efficiency and high investment costs. It can be advantageously applied only in the case of feedings with low-quality hydrocarbon feedstocks, such as heavy hydrocarbon residues from oil processing (petroleum coke, deasphalter pitch, residual oils, etc..) which cannot be transformed into synthesis gas with catalytic-type techniques. The high costs of this technology are due to: (i) the high temperatures of the synthesis gas produced at the outlet of the reactors (about 1,400°C) which make the thermal recovery operations complex and non-efficient and (ii) the high oxygen consumptions. PO however has a great operative flexibility as it is a process to which liquid and gaseous hydrocarbon feedstocks can be fed. It is probable that in the future the competitiveness and diffusion of non-catalytic PO will increase as a result of the high costs of NG, the necessity of treating heavy crude oils and the possibility of integrating the production of H₂ and energy with combined cycles (IGCC) (G. Collodi, Hydroc. Eng. 2001, 6 (8), 27).

Even if SR and non-catalytic PO technologies are reliable and fully consolidated, they have a poor flexibility with respect to the necessity of varying the production capacity. These technologies, furthermore, have technical difficulties and high implementation costs when intermediate hydrocarbon feedstocks between desulfurized NG and heavy residues from oil processing are to be used as starting feedstocks.

The objective of the present invention is consequently to find a process for producing synthesis gas and therefore H₂, having investment costs and energy consumptions lower than those of the processes of the known art and which has a wider flexibility both with respect to the productive capacity and to the possibility of being fed with various kinds of liquid hydrocarbon feedstocks, even containing relevant amounts of sulfurated and nitrogenous compounds.

WO 2005/023710 describes a catalytic partial oxidation for producing synthesis gas via a Catalytic Partial Oxidation process starting from liquid and gaseous fuels and also from oil distillation heavy residues containing sulphur.

US 6,221,280 discloses a process of substantially only catalytic partial oxidation starting from heavy hydrocarbons containing sulphur with contact time lower than 500 ms .

US 2005/089465 relates to improved catalytic partial oxidation processes for converting heavy hydrocarbon fuels in the mixture of H₂ and CO.

An object of the present invention therefore relates to a process for the production of synthesis gas and hydrogen starting from liquid hydrocarbon feedstocks according to claim 1.

The process according to the present invention allows the production of synthesis gas, and therefore of hydrogen, utilizing liquid hydrocarbon streams, whose use is currently of little convenience or technically complex.

These streams include naphthas, various kinds of gas oil, other products of refining and up-grading cycles of oil, other heavy residues and/or mixtures thereof. Examples of liquid hydrocarbon streams coming from refining and up-grading processes containing large quantities of sulfurated and nitrogenous compounds, which can be used for the purposes of the present invention, are the following: "Light Cycle Oils" (LCO), "Heavy Cycle Oils" (HCO), Vacuum Gas Oils (VGO) and "Deasphalted Oils" (DAO).

The stream of the liquid hydrocarbon feedstock is subjected to a first "nebulization/vaporization" phase wherein the low-boiling components are vaporized and the high-boiling components nebulized by means of a suitable device.

In order to facilitate the nebulization/vaporization of the liquid hydrocarbon feedstock, the device also utilizes a stream of a gaseous propellant selected from gaseous hydrocarbons and/or vapour.

The process according to the present invention is possibly followed by another catalyst capable of promoting and completing the water gas shift reaction.

The gaseous hydrocarbon stream used in phase 3 of the process described in the present invention can comprise one or more streams selected from methane, NG, refinery gas or purge gas of oil up-grading processes, liquefied petroleum gas, (LPG) and/or mixtures thereof, possibly with the addition of CO₂; even more preferably, the gaseous hydrocarbon feedstock consists of NG and refinery gas or purge gas of oil up-grading processes.

In addition to the possibility of treating various kinds of hydrocarbon feedstocks, the process according to the present invention also offers the possibility of varying the productivity of H₂ to follow the requirements of refining operations. Not only the demand for H₂ is increasing, in fact, but also the capacity and quality of the hydrocarbons produced by refining and up-grading operations can undergo a sequential evolution; in some cases, this evolution has cyclic characteristics during various periods of the year.

The process of the present invention can not only be used in refining environments in a strict sense, but more generally in oil up-grading environments and, in particular, in the up-grading of heavy and extra-heavy crude oils. In these production contexts, the production of H₂ can be obtained with the process described by the present invention, utilizing various intermediate products of the processing cycles.

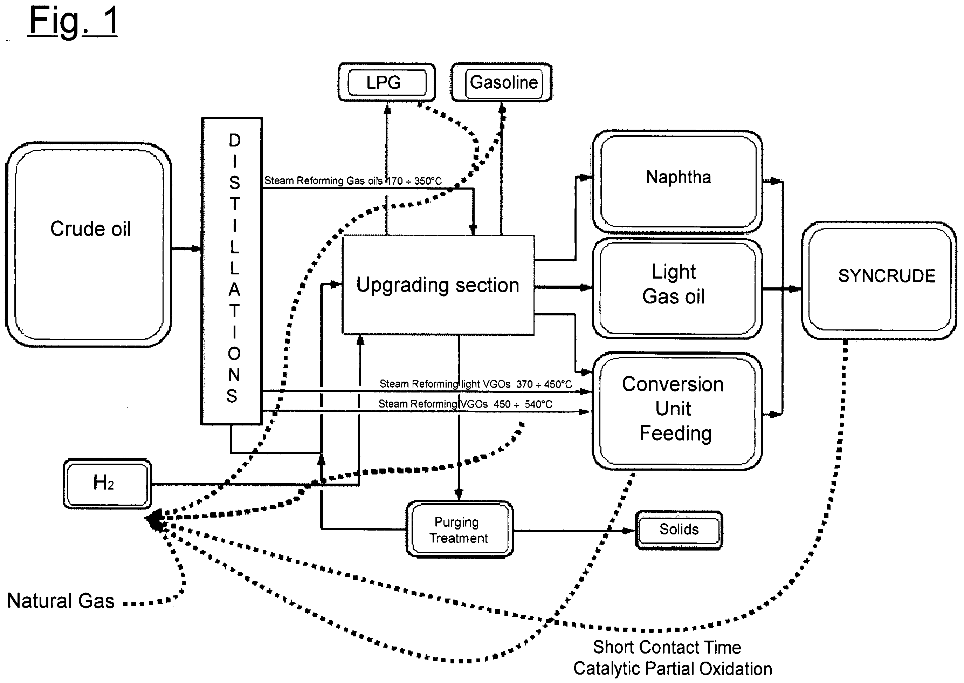

The process of the present invention, for example, can be usefully adopted for producing H₂ for the EST process (PEP Review 99-2: ENI Slurry Hydroprocessing Technology For Diesel Fuel, WO2004/056947A1). The EST process, in fact, comprises a catalytic hydroprocessing treatment in slurry phase (Figure 1). In some schemes of the EST process the hydroprocessing step is also integrated with a "solvent deasphalting" step. The solvent deasphalting step allows the recovery, and recycling, to the hydroprocessing, of an asphaltene fraction in which the catalyst is concentrated, releasing a stream of deasphalted oil (DAO) which does not include transition metals. This DAO stream can be advantageously recovered as liquid feedstock to produce synthesis gas and, therefore, H₂, using the process according to the present invention. In this way the EST process can allow an almost complete conversion of the heavy hydrocarbon feedstock (heavy and extra-heavy crude oils, such as, for example, Ural crude oil and bitumen of Athabasca - Canada) into light products, without the intervention of additional hydrocarbon streams for producing hydrogen.

Other hydrocarbon cuts of the EST process, however, can also be used in the process for the production of H₂ described in the present invention. Among these VGO can be mentioned in particular.

Finally, it can be noted that this type of hydrocarbon feedstock cannot be used in SR processes for technical reasons, whereas if these feedstocks were used in non-catalytic PO processes, there would be very high hydrogen production costs.

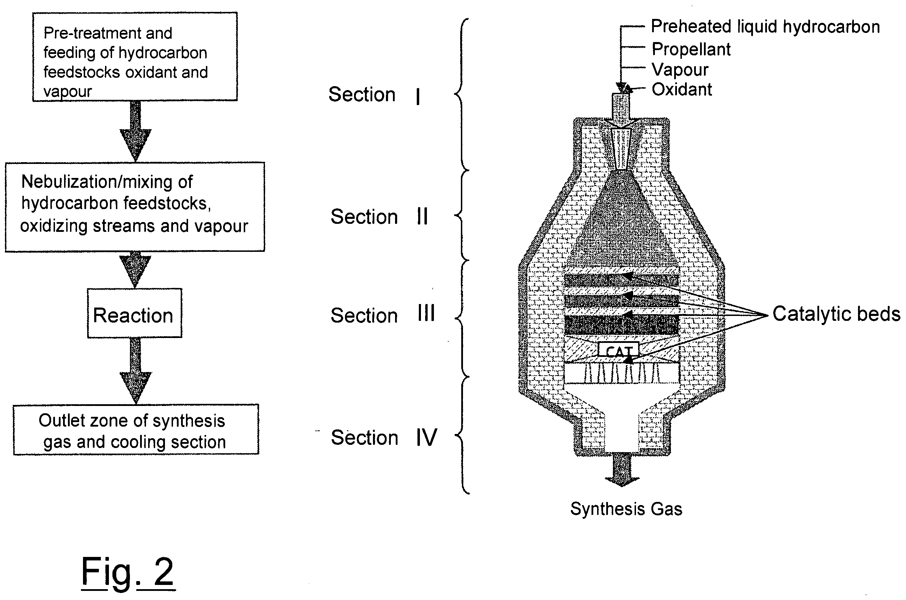

As mentioned above, in order to effect the process according to the present invention, a reaction equipment can be conveniently used, comprising at least the following sections (Figure 2):
I) inlet section of the liquid and gaseous reagent streams,
II) mixing section of the liquid and gaseous reagent streams,
III) reaction section,
IV) cooling section.

The following reagent streams are fed to section I:
- optionally, a stream of pre-heated vapour at a temperature sufficient for reaching a vapour pressure preferably higher than 1.5 MPa (15 atm), more preferably 2 MPa (20 atm), and in any case higher than the operating pressure of the nebulization and mixing section (section II) and of the reaction section (section III).
- a pre-heated oxidizing stream, preferably consisting of pure oxygen, air enriched with oxygen, air and/or mixtures thereof; the stream can also be mixed with vapour.
- a pre-heated stream of a liquid hydrocarbon feedstock, wherein a liquid hydrocarbon feedstock means any hydrocarbon feedstock which is liquid at the temperature and pressure at which the nebulization takes place; the liquid hydrocarbon feedstock consists of one or more of naphthas, VGO, LCO and HCO gas oils, other products of oil refining and up-grading cycles, such as DAOs, other heavy residues and/or mixtures thereof;
- a pre-heated stream of a gaseous hydrocarbon feedstock, wherein gaseous hydrocarbon feedstock means any hydrocarbon feedstock which is gaseous at the temperature and pressure at which the nebulization/vaporization takes place; this stream is preferably selected from methane, natural gas (NG), refinery gas or purge gas from up-grading processes, liquefied petroleum gas (LPG), and/or mixtures thereof possibly with the addition of CO₂; even more preferably, the gaseous hydrocarbon feedstock consists of NG and refinery gas or purge gas from up-grading processes.
- a pre-heated stream of a propellant compound to facilitate and improve the nebulization of the liquid hydrocarbon stream, which is effected in suitable nebulization devices present in section II of the reaction equipment; the propellant is selected from vapour and/or a gaseous hydrocarbon, the latter being preferably selected from natural gas (NG), refinery gas or purge gas of up-grading processes, liquefied petroleum gas (LPG) and/or mixtures thereof. Even more preferably, the propellant is selected from vapour, NG, refinery gas or purge gas of up-grading processes.

The propellant can also be added with CO₂.

The reagent streams are fed to section I at a temperature ranging from 50 to 500°C, preferably from 100 to 400°C, and at a pressure ranging from 0.2 to 5 MPa (2 to 50 atm) .

In the process according to the present invention the vapour can therefore be used both as a propellant stream and also for diluting the oxidizing stream. The dilution of the oxidizing stream allows the reduction of the partial pressure gradients of oxygen in the nebulization and mixing area (section II) and, consequently, the risk of triggering homogeneous gaseous combustion reactions.

The liquid hydrocarbon feedstock is fed to section I after pre-treatment which consists in heating the stream to a temperature sufficient for i) the feedstock to have a viscosity which is such as to allow its pumping and nebulization/vaporization in section II and ii) producing a mixture in section II with a temperature ranging from 50 to 500°C, preferably from 100 to 400°C.

The ratio which defines the quantity of liquid and gaseous hydrocarbon feedstocks fed to the reaction equipment, will be hereinafter be indicated as C_{gas}/C_{liq}. This ratio corresponds to the ratio between the number of carbon atoms fed as gaseous hydrocarbon feedstock and the number of carbon atoms fed as liquid hydrocarbon feedstock. The C_{gas/}C_{liq} ratio can have any value "n", wherein n is higher than or equal to 0. The condition n = 0 corresponds to the case in which vapour alone is used as propellant. The possibility of varying the composition of the hydrocarbon feedstock to be converted into synthesis gas, within such a wide range, makes the process according to the present invention particularly flexible, as it is possible to feed feedstocks of different nature and according to their availability in the refinery and, more generally, in up-grading contexts.

Section II is the mixing section in which the reagent streams are mixed. The mixing of the reagent streams is necessary for obtaining a homogeneous mixture to be subjected to the catalytic reaction in section III of the reaction equipment. This phase is carried out at a temperature varying from 50 to 500°C and at a pressure ranging from 0.2 to 5 MPa (2 to 50 atm). The nebulization/vapourization and mixing processes must be effected so as to avoid reactions of triggering and back-propagation of flames and, in general, the triggering of radical reactions in gaseous phase. These reactions must be avoided as:
i) their exothermicity can lead to temperature rises which, if they were to extend to the reaction zone, could damage the catalyst and/or partially deactivate it,
ii) they cause the formation of carbonaceous residues or precursors of carbonaceous residues which could clog the catalytic beds and damage the thermal exchange systems in section IV,
iii) they reduce the selectivity of the reaction towards the desired products (H₂ and CO) and the conversion of the hydrocarbon reagents.

The stream of liquid hydrocarbon feedstock must be nebulized/vaporized, before being mixed with the other reagent streams with the help of a gaseous propellant which can be added to the feedstock itself. For the nebulization/vaporization, section II envisages the use of a specific device called "atomization/nebulization" device.

The device for nebulizing the liquid hydrocarbon feedstock is preferably a device analogous to that described in WO2006/034868A1. This device envisages separate inlet areas for the liquid hydrocarbon stream and the possible propellant stream.

The nebulized liquid hydrocarbon stream is then mixed with the oxidizing stream in the mixing chamber of section II, located immediately upstream of the reaction section, forming a possibly biphasic liquid-gas mixture.

The gaseous propellant is selected from vapour and/or a hydrocarbon stream, such as for example natural gas, LPG, refinery gas or purge gas of up-grading processes and/or mixtures thereof, possibly with the addition of CO₂.

The nebulization of the liquid hydrocarbon can take place with a single- or multi-step process. The addition can be envisaged, for example, in the atomization/nebulization device (total or partialized in a number of steps) of a quantity of gaseous propellant which allows a first dispersion of the liquid hydrocarbon feedstock. The expansion and nebulization of the liquid feedstock can be subsequently effected through suitably-sized orifices present in the mixing chamber, where the hydrocarbon stream is reached by the oxidizing stream.

The mixing chamber is installed immediately downstream of the atomization/nebulization device of the liquid hydrocarbon. Said chamber, whose purpose is to homogenize the reaction mixture before sending it onto the catalytic bed, can, for example, have a cylindrical or truncated-conical geometry. The volume of the mixing chamber must be such that the flows of nebulized/vaporized liquid hydrocarbon and oxidizing stream coming from the distribution area of the atomization/nebulization device, are closely mixed, preferably by diffusion, under such conditions as to reduce the volumes necessary for the mixing phenomena. The design of the mixing chamber must also avoid the formation of permanent deposits of the liquid reagents on the walls, as, at a high temperature, these residues can in fact create carbonaceous residues. In order to avoid the formation of carbonaceous residues, an expedient is to cover the walls of the mixing chamber with active catalytic species with respect to the partial oxidation reactions of the hydrocarbons. For this purpose, catalysts can be adopted, having a composition analogous to that of the catalysts used in the reaction section (section III) for catalyzing the transformation of the reagent streams into synthesis gas.

Finally, the reagent flows must be such that the residence times of the reagent streams in the mixing area are lower than the flame delay times, whereas the linear rates of the reagents must be higher than the flame rates. Both the flame delay times and flame propagation times vary in relation to the compositions of the reaction mixture and flow, pressure and temperature conditions.

In the reaction section (section III) the biphasic liquid-gas stream of reagents, coming from section II, reaches and passes through one or more structured catalytic beds comprising a suitable catalyst arranged on one or more layers. The structured catalytic beds can consist of catalytic gauzes and/or different kinds of metallic or ceramic monoliths. Structured catalytic systems of this type are described for example in: i) Cybulski and J.A. Mulijn, "Structured Catalysts and Reactors"; Series Chemical Industries, 2006, Vol. 110; Taylor and Francis CRC Press, ii) G. Groppi, E. Tronconi; "Honeycomb supports with high thermal conductivity for gas/solid chemical processes, "Catalysis Today, Volume 105, Issues 3-4, 15 August 2005, Pages 297-304.

The mixture of reagents must pass through the layers of catalyst with very reduced contact times, ranging from 0.01 to 100 ms and preferably from 0.1 to 10 ms, so as to progressively promote the catalytic partial oxidation reactions (eq. [6]) and prevent the strong exothermicity of the total oxidation chemical processes (eq. [7]), competitive with the partial oxidation processes, from causing the back-propagation of the reactions in the mixture of reagents. This back-propagation would trigger flame processes which would cause losses in the overall selectivity of the reaction and the formation of carbonaceous residues.

CₙHₘ + n/2 O₂ = n CO + m/2 H₂ [6]

CₙHₘ + (n+m/4) O₂ = n CO₂ + m/2 H₂O [7]

The short contact times also allow a gradual oxygen consumption during the passage of the reagent mixture from one catalytic layer to the subsequent one. This configuration of the reaction section and, in particular, the presence of structured catalysts allows the oxidizing stream to be partialized on various layers of catalyst, thus modulating the temperature rise in the reaction mixture and favouring the evaporation of the high-boiling hydrocarbon compounds rather than their thermal decomposition. The biphasic reaction mixture is transformed on the catalytic bed, under the above conditions, into a mixture of reaction products whose main components are H₂ and CO and the minor components are CO₂, vapour and CH₄. These expedients allow the process according to the present invention to convert liquid hydrocarbon feedstocks also containing high quantities of sulfurated and nitrogenous compounds into synthesis gas with reduced oxygen and energy consumptions.

Among the structured catalytic beds which can be used for the purposes of the present invention, it is preferable to use structured catalytic beds comprising a support of the metallic type, such as metallic gauzes, metallic foams, metallic honeycomb monoliths or other monoliths obtained by assembling corrugated metallic sheets.

Some of the catalysts of this kind are already used in industrial processes, such as ammonia production processes, catalytic combustion processes of hydrocarbons and, in particular, abatement processes of the particulate in the emissions of internal combustion engines, the abatement of volatile organic compounds (VOC) produced in numerous industrial processing cycles, water gas shift reactions.

Metallic alloys widely used in structured catalytic beds as a support of the active catalytic species are ferritic alloys commercially known as "FeCralloys", which contain, for example, aluminum (0.5-12%), chromium (20%), yttrium (0.1-3%) and iron or those containing aluminum (5.5%), chromium (22%), cobalt (0.5%) and iron (see J. W. Geus, J.C. van Giezen, Catalysis Today, 1999, 47, 169-180). These alloys, passivated (surface oxidized) with a surface layer of aluminum oxide and/or other oxide systems (Ce-Zr oxide systems are often used), can undergo further wash-coating treatment of various kinds to improve the anchorage of the active catalytic species. The catalytic sites are also generated on the oxide systems surfaces with various methods known to experts in the field (for example by impregnation with solutions of chemical compounds). In particular, the catalytic species which have proved to be active in the process according to the present invention contain the following types of transition metals: Rh, Ru, Ir, Pt, Pd, Au, Ni, Fe, Co also mixed with each other. The catalytic activity is preferably obtained with the use of systems of the bimetallic type containing Rh-Ru, Rh-Ni, Rh-Fe, Rh-Co, Ru-Ni, Ru-Fe, Ru-Co, Ru-Au, Ru-Pt, Rh-Ir, Pt-Ir, Au-Ir, and trimetallic systems containing Rh-Ru-Ni, Ru-Au-Ni, Rh-Ru-Co, Rh-Ir-Ni, Rh-Au-Ir.

An important advantage offered by supports of the metallic type is the possibility of varying their temperature by heating them electrically. The electric heating of the metallic supports not only allows fast start-up procedure but also the reactivity of the single catalytic layers to be varied with the same flow and composition of the reagent mixture. The use of electrically heated metallic supports also allows the mixtures of reagents to be fed at relatively low temperatures, reducing or avoiding the risk of substoichiometric combustion reactions in the mixing and nebulization section II.

A further advantage of metallic supports which can be heated electrically is the possibility of regenerating the catalytic activity of the surface species without interrupting the conversion process. The regeneration of the catalyst can be obtained by electrically heating the metallic support to a temperature which is sufficient for eliminating the substances which poison the catalyst, promoting their desorption and chemical transformation. These poisoning substances can consist of: i) sulfurated compounds which are unstable on surfaces heated to a high temperature and/or ii) carbonaceous deposits which can be formed by decomposition of the hydrocarbon compounds in particular unsaturated and/or high-boiling hydrocarbon compounds.

Section III also comprises a final catalytic bed, located downstream of the previous beds, possibly with larger dimensions with respect to these. The mixture of reaction products comprising H₂ and CO passes through the final catalytic bed, with contact times ranging from 1 to 1,000 ms, preferably from 10 to 100 ms. This latter bed can consist of a structured catalytic bed or catalyst pellets, such as for example the pellets described in US 2005/0211604 A1. The function of the latter catalytic bed is to complete the partial oxidation processes and improve the selectivity towards the production of synthesis gas by means of SR, CO₂ Reforming and WGS processes (eq. [1-3] of Table 1).

At the end of the catalytic partial oxidation reaction, at the outlet of section III, the mixture of reaction products containing the synthesis gas has a maximum temperature of 1,200 °C, preferably a maximum temperature of 1,150°C.

In section IV, the synthesis gas coming from section III is then rapidly sent to a thermal exchange area in which it undergoes a cooling process. The cooling must be rapid to avoid the triggering of undesired chemical processes, such as the formation of carbonaceous substances or precursors of carbonaceous substances such as unsaturated hydrocarbon molecules, in the unconverted hydrocarbon fraction. The cooling of the synthesis gas must also be completed rapidly to avoid methanation reactions [8] and disproportioning reactions of the carbon monoxide [9]:

CO + H₂ = CH₄ + H₂O [8]

2 CO = CO₂ + C [9]

With respect to the non-catalytic PO process, the process for producing synthesis gas and hydrogen through the catalytic partial oxidation of liquid hydrocarbon feedstocks described herein has the following advantages:
1) the possibility of controlling the temperature peaks inside the reactors (Tₘₐₓ 1,200°C, preferably 1,150°C, for the process according to the present invention against the approximately 2,000°C of non-catalytic PO processes).
2) the possibility of catalytically controlling the selectivity of the reactions towards partial oxidation products (CO and H₂), reducing the formation of by-products (carbonaceous residues and unsaturated precursors of carbonaceous residues), inevitable in substoichiometric processes in homogeneous gaseous phase;
3) the possibility of obtaining outlet temperatures of synthesis gas lower than 1,200°C and preferably lower than 1,150°C;
4) the possibility of varying both the composition and flow of hydrocarbon feedstock, in addition to the flows of the oxidizing stream and vapour.

The possibilities included in points 1) to 3) allow the exchange surfaces to be greatly reduced, in some cases avoiding the use of preheating ovens for the reagents with significant and favourable effects on the investment costs and energy consumption. These exchange surfaces and in particular preheating ovens are one of the main costs associated with the non-catalytic PO technology.

The possibilities included in the above points 2) and 3), on the other hand, allow a reduction in the oxygen consumption and simplify the treatment processes of the synthesis gas produced (cooling operations, washing, etc.) which represent the other two main cost items of non-catalytic PO processes.

Finally, the possibility included in point 4) above allows the conversion system of the hydrocarbon feedstocks into synthesis gas and therefore into hydrogen, to vary the production capacity of H₂ (± 60-80%) and also to use different hydrocarbon feedstocks available in the refinery without requiring significant modifications to the existing plants.

The process according to the present invention also allows synthesis gas and therefore H₂ to be produced by alternating the use of natural gas and other gaseous hydrocarbons with various refinery feedstocks, whose exploitation is currently not economically convenient or is extremely complex from a technical point of view (for example LCO, HCO and DAO).

The process according to the present invention can be advantageously used for producing synthesis gas and therefore H₂ starting from intermediate hydrocarbon feedstocks resulting from processings of the EST process, which cannot normally be used in traditional SR, non-catalytic PO and ATR processes.

It also allows the productivity of H₂ to be varied for satisfying the requirements of refinery operations, as it is able to use the various refinery feedstock streams available, which undergo a sequential evolution, in some cases with cyclic characteristic during the year.

## Claims

1. A process for producing synthesis gas starting from liquid hydrocarbon feedstocks, comprising at least the following operations:
1) pre-heating a stream of liquid hydrocarbon feedstocks,
2) nebulizing and/or vaporizing the stream of the pre-heated liquid hydrocarbon feedstock, at a temperature ranging from 50 to 500°C and a pressure of 0.2 to 5 MPa (2 to 50 atm), consisting of one or more of the following hydrocarbons:
- naphthas,
- various kinds of gas oils, such as LCO, HCO and VGO,
- other products of refining cycles and oil up-grading, such as DAOs,
- other heavy residues, the nebulisation being effected with the help of a gaseous propellant selected from vapour and/or a gaseous hydrocarbon, and resulting in the formation of a nebulized and/or vaporized liquid hydrocarbon stream;
3) mixing the nebulized and/or vaporized liquid hydrocarbon stream coming from phase 2) with:
a) an oxidizing stream,
b) a gaseous hydrocarbon stream,
at a temperature ranging from 50 to 500°C and a pressure of 0.2 to 50 MPa (2 to 50 atm), with the formation of a possibly biphasic liquid-gas reaction mixture;
4) passing the reaction mixture coming from phase 3) through at least a first structured catalytic bed with the formation of a mixture of reaction products comprising H₂ and CO, said at least a first structured catalytic bed comprising a catalytic partial oxidation catalyst, arranged on one or more layers, the reaction mixture flowing through each of the layers with a contact time varying from 0.1 to 100 ms;
5) passing the mixture of reaction products comprising H₂ and CO coming from phase 4) through a final catalytic bed with a differentiated filling, comprising a catalyst capable of completing the partial oxidation reactions and promoting the steam reforming and/or CO₂ reforming reactions, with a contact time ranging from 1 to 1,500 ms.
6) cooling the mixture of reaction products coming from phase 5).

2. The process according to claim 1, wherein phase 2) is carried out at a temperature ranging from 100 to 400°C.

3. The process according to any of claims 1, 2, wherein the oxidizing stream is selected from a stream of oxygen, air or oxygen enriched air.

4. The process according to any of the claims from 1 to 3, wherein phase 3) is carried out at a pressure higher than 1.5 MPa (15 atm).

5. The process according to any of the claims from 1 to 4, wherein the at least a first structured catalytic bed of phase 4) also comprises:
- a support selected from metallic gauze, metallic foam, metallic honeycomb monolith and/or monolith obtained by assembling corrugated metallic sheets,
- one or more types of transition metals selected from Rh, Ru, Ir, Pt, Pd, Au, Ni, Fe, Co and/or mixtures thereof.

6. The process according to any of the claims from 1 to 5, followed by another catalyst capable of promoting and completing the water gas shift reaction, and sending the resulting mixture of reaction products to the subsequent step 6).

7. The process according to claim 6, wherein the final catalytic bed of phase 5) is a structured catalytic bed or a catalytic bed comprising a catalyst in the form of pellets.

8. The process according to any of the claims from 1 to 7, wherein the gaseous hydrocarbon stream in phase 3 is a stream of a gaseous hydrocarbon, possibly with the addition of CO₂, selected from methane, NG, refinery gas or purge gas of oil up-grading processes, liquefied petroleum gas and/or mixtures thereof, preferably selected from natural gas, refinery gas, purge gas of oil up-grading processes and/or mixtures thereof.

9. The process according to any of the claims from 1 to 8, wherein the gaseous propellant is a gaseous hydrocarbon, possibly with the addition of CO₂, selected from natural gas, refinery gas, purge gas of oil up-grading processes liquefied petroleum gas and/or mixtures thereof, preferably natural gas, refinery gas, purge gas of oil up-grading processes.

10. The process according to any of the claims from 1 to 9, wherein the structured catalytic bed is heated electrically.

11. The process according to claim 1, wherein the nebulisation is carried out with the addition of CO₂.

12. The process according to claim 1, wherein in step 3) the oxidizing stream is mixed with vapour.

## Patentansprüche

1. Verfahren zur Herstellung von Synthesegas, ausgehend von flüssigen Kohlenwasserstoffeinspeisungen, umfassend mindestens die folgenden Tätigkeiten:
1) Vorerwärmen eines Stroms von flüssigen Kohlenwasserstoffeinspeisungen,
2) Vernebelung und/oder Verdampfung des Stroms der vorerwärmten flüssigen Kohlenwasserstoffeispeisung bei einer Temperatur in einem Bereich von 50 bis 500 °C und einem Druck von 0,2 bis 5 MPa (2 bis 50 atm), bestehend aus einem oder mehreren der folgenden Kohlenwasserstoffe:
- Naphthas,
- verschiedenen Arten von Gasölen, wie beispielsweise LCO, HCO und VGO,
- anderen Produkten aus Raffinierzyklen und Ölaufbesserung, wie beispielsweise DAOs,
- anderen Schwerrückständen, wobei die Verneblung ausgeführt wird mit Hilfe eines gasförmigen Treibmittels, ausgewählt aus Dampf und/oder gasförmigen Kohlenwasserstoffen, und zur Bildung eines vernebelten und/oder verdampften flüssigen Kohlenwasserstoffstroms führt;
3) Vermischen des vernebelten und/oder verdampften flüssigen Kohlenwasserstoffstroms, erhalten aus Phase 2), mit:
a) einem Oxidierungsstrom,
b) einem wässrigen Kohlenwasserstoffstrom, bei einer Temperatur in einem Bereich von 50 bis 500 °C und einem Druck von 0,2 bis 50 MPa (2 bis 50 atm), unter Bildung einer gegebenenfalls Zweiphasen-Flüssiggas-Reaktionsmischung;
4) Hindurchleiten der aus Phase 3) erhaltenen Reaktionsmischung durch ein mindestens erstes strukturiertes katalytisches Bett unter Bildung einer Mischung von Reaktionsprodukten, umfassend H₂ und CO, wobei das mindestens eine erste strukturierte katalytische Bett einen katalytischen Teiloxidationskatalysator umfasst, angeordnet in einer oder mehreren Schichten, wobei die Reaktionsmischung durch jede der Schichten mit einer Kontaktzeit in einem Bereich von 0,1 bis 100 ms hindurchfließt;
5) Hindurchleiten der aus Phase 4) erhaltenen Mischung aus Reaktionsprodukten, umfassend H₂ und CO, durch ein finales katalytisches Bett mit einer differenzierten Füllung, umfassend einen Katalysator, der in der Lage ist, die Teiloxidationsreaktionen zu vervollständigen und die Stromreformierung und/oder CO₂-reformierenden Reaktionen zu fördern, mit einer Kontaktzeit in einem Bereich von 1 bis 1 500 ms;
6) Abkühlen der Mischung der aus Phase 5) erhaltenen Reaktionsprodukte.

2. Verfahren nach Anspruch 1, worin Phase 2) durchgeführt wird bei einer Temperatur in einem Bereich von 100 bis 400 °C.

3. Verfahren nach irgendeinem der Ansprüche 1, 2, wobei der Oxidationsstrom ausgewählt ist aus einem Strom von Sauerstoff, Luft oder mit Sauerstoff angereicherter Luft.

4. Verfahren nach irgendeinem der Ansprüche 1 bis 3, worin Phase 3) durchgeführt wird bei einem Druck größer als 1,5 MPa (15 atm).

5. Verfahren nach irgendeinem der Ansprüche 1 bis 4, worin das mindestens erste strukturierte katalytische Bett von Phase 4) auch umfasst:
- einen Träger, ausgewählt aus metallischen Gewebe, metallischen Schäumen, metallischen Honigwaben-Monolithen und/oder Monolithen, erhalten durch Anordnung von gewellten metallischen Blechen,
- einen oder mehrere Arten von Übergangsmetallen, ausgewählt aus Rh, Ru, Ir, Pt, Pd, Au, Ni, Fe, Co und/oder Mischungen davon.

6. Verfahren nach irgendeinem der Ansprüche 1 bis 5, gefolgt von einem anderen Katalysatoren, der in der Lage ist, die Wasser-Gas-Shift-Reaktion zu fördern und zu vervollständigen, und Abgeben der erhaltenen Mischung aus Reaktionsprodukten an den folgenden Schritt 6).

7. Verfahren nach Anspruch 6, worin das finale katalytische Bett von Phase 5) ein strukturiertes katalytisches Bett oder ein katalytisches Bett ist, das einen Katalysator in Form von Pellets umfasst.

8. Verfahren nach irgendeinem der Ansprüche 1 bis 7, worin der gasförmige Kohlenwasserstoffstrom in Phase 3 ein Strom von gasförmigen Kohlenwasserstoff ist, gegebenenfalls mit Zusatz von CO₂, ausgewählt aus Methan, NG, Raffineriegas oder Spülgas aus ölverbessernden Verfahren, verflüssigtem Petrolgas und/oder Mischungen davon, vorzugsweise ausgewählt aus natürlichem Gas, Raffineriegas, Spülgas aus ölverbessernden Verfahren und/oder Mischungen davon.

9. Verfahren nach irgendeinem der Ansprüche 1 bis 8, worin das gasförmige Treibmittel ein gasförmiger Kohlenwasserstoff ist, gegebenenfalls mit Zusatz von CO₂, ausgewählt aus natürlichem Gas, Raffineriegas, Spülgas aus ölverbessernden Verfahren, verflüssigtem Petrolgas und/oder Mischungen davon, vorzugsweise natürlichem Gas, Raffineriegas, Spülgas aus ölverbessernden Verfahren.

10. Verfahren nach irgendeinem der Ansprüche 1 bis 9, worin das strukturierte katalytische Bett elektrisch erhitzt wird.

11. Verfahren nach Anspruch 1, worin die Vernebelung mit Zusatz von CO₂ durchgeführt wird.

12. Verfahren nach Anspruch 1, worin in Schritt 3) der Oxidierungsstrom mit Dampf vermischt wird.

## Revendications

1. Procédé pour produire du gaz de synthèse et de l'hydrogène à partir de charges d'alimentation en hydrocarbure(s) liquide(s), qui comprend au moins les opérations suivantes :
1) préchauffage d'un courant de charges d'alimentation en hydrocarbure(s) liquide(s),
2) pulvérisation et/ou vaporisation, à une température valant de 50 °C à 500 °C et sous une pression de 0,2 à 5 MPa (2 à 50 atm), du courant constitué par la charge d'alimentation en hydrocarbure(s) liquide(s), consistant en un ou plusieurs des hydrocarbures suivants :
- naphtas,
- divers types de gazole, tels que gazole léger (LCO pour *low cycle oil),* gazole lourd (HCO pour *heavy cycle oil*) et gazole sous vide (VGO pour *vacuum gas oil*),
- autres produits issus de cycles de raffinerie et de valorisation du pétrole, tels que des huiles désasphaltées (DAOs pour *deasphalted oils*),
- autres résidus lourds,
la pulvérisation étant réalisée à l'aide d'un gaz propulseur, choisi parmi de la vapeur et/ou un hydrocarbure gazeux, et se traduisant par la formation d'un courant d'hydrocarbure(s) liquide(s) pulvérisé(s) et/ou vaporisé(s),
3) mélange du courant d'hydrocarbure(s) liquide(s) pulvérisé(s) et/ou vaporisé(s), issu de la phase 2), avec :
a) un courant oxydant,
b) un courant d'hydrocarbure(s) gazeux,
à une température valant de 50 °C à 500 °C et sous une pression de 0,2 à 50 MPa (2 à 50 atm), avec formation d'un mélange réactionnel liquide-gaz éventuellement biphasique,
4) passage du mélange réactionnel issu de la phase 3) à travers au moins un premier lit catalytique structuré, avec formation d'un mélange de produits réactionnels comprenant du dihydrogène H₂ et du monoxyde de carbone CO, ledit premier lit catalytique structuré, au nombre d'au moins un, comportant un catalyseur d'oxydation catalytique partielle, disposé sur une ou plusieurs couche(s), le mélange réactionnel traversant chacune des couches avec un temps de contact variant de 0,1 à 100 ms,
5) passage du mélange de produits réactionnels comprenant du dihydrogène et du monoxyde de carbone, issu de la phase 4), à travers un lit catalytique final à garnissage différencié, comprenant un catalyseur capable d'achever les réactions d'oxydation partielle et de favoriser les réactions de reformage à la vapeur et/ou de reformage au dioxyde de carbone CO₂, avec un temps de contact valant de 1 à 1500 ms,
6) refroidissement du mélange de produits réactionnels, issu de la phase 5).

2. Procédé conforme à la revendication 1, dans lequel la phase 2) est effectuée à une température valant de 100 °C à 400 °C.

3. Procédé conforme à n'importe laquelle des revendications 1, 2, dans lequel le courant oxydant est choisi parmi des courants d'oxygène, d'air ou d'air enrichi en oxygène.

4. Procédé conforme à n'importe laquelle des revendications 1 à 3, dans lequel la phase 3) est effectuée sous une pression supérieure à 1,5 MPa (15 atm).

5. Procédé conforme à n'importe laquelle des revendications 1 à 4, dans lequel le premier lit catalytique structuré, au nombre d'au moins un, de la phase 4) comporte également :
- un support choisi parmi de la toile métallique, de la mousse métallique, un monolithe métallique en nid d'abeilles et/ou un monolithe obtenu par assemblage de tôles ondulées,
- un ou plusieurs type(s) de métaux de transition choisi(s) parmi ceux de symboles Rh, Ru, Ir, Pt, Pd, Au, Ni, Fe et Co, et/ou des mélanges de ceux-ci.

6. Procédé conforme à n'importe laquelle des revendications 1 à 5, suivi par la mise en oeuvre d'un autre catalyseur capable de favoriser et d'achever la réaction de conversion à la vapeur d'eau, et l'envoi du mélange de produits réactionnels ainsi obtenu vers l'étape 6) ultérieure.

7. Procédé conforme à la revendication 6, dans lequel le lit catalytique final de la phase 5) est un lit catalytique structuré ou un lit catalytique comportant un catalyseur sous forme de pastilles.

8. Procédé conforme à n'importe laquelle des revendications 1 à 7, dans lequel le courant d'hydrocarbure(s) gazeux de la phase 3) est un courant constitué d'un hydrocarbure gazeux, éventuellement avec addition de CO₂, choisi parmi du méthane, du gaz naturel (NG pour *natural gas*), du gaz de raffinerie ou du gaz de purge de procédés de valorisation du pétrole, du gaz de pétrole liquéfié et/ou des mélanges de telles substances, et de préférence choisi parmi du gaz naturel, du gaz de raffinerie, du gaz de purge de procédés de valorisation du pétrole et/ou des mélanges de telles substances.

9. Procédé conforme à n'importe laquelle des revendications 1 à 8, dans lequel le gaz propulseur est un hydrocarbure gazeux, éventuellement avec addition de CO₂, choisi parmi du gaz naturel, du gaz de raffinerie, du gaz de purge de procédés de valorisation du pétrole, du gaz de pétrole liquéfié et/ou des mélanges de telles substances, et de préférence du gaz naturel, du gaz de raffinerie et du gaz de purge de procédés de valorisation du pétrole.

10. Procédé conforme à n'importe laquelle des revendications 1 à 9, dans lequel le lit catalytique structuré est chauffé par chauffage électrique.

11. Procédé conforme à la revendication 1, dans lequel la pulvérisation est réalisée avec addition de CO₂.

12. Procédé conforme à la revendication 1, dans lequel le courant oxydant de l'étape 3) est mélangé avec de la vapeur.
